# EUROPÄISCHE PATENTSCHRIFT

(11) **EP 3 917 447 B1**
(45) Veröffentlichungstag und Bekanntmachung des Hinweises auf die Patenterteilung: **06.03.2024**
(21) Anmeldenummer: 20702777.2
(22) Anmeldetag: 29.01.2020
(51) Int. Cl.: A61C 13/00, B33Y 80/00, B33Y 10/00, A61C 9/00, A61C 19/05

(54) **VERFAHREN ZUR HERSTELLUNG EINES ZAHNERSATZES UNTER VERWENDUNG EINER DIGITALEN ZAHNREIHENDATENBANK, UND VERWENDUNG EINER SOLCHEN DIGITALEN ZAHNREIHENDATENBANK**
METHOD FOR PRODUCING A DENTURE USING A DIGITAL DENTAL ARCH DATABASE, AND USE OF SUCH A DIGITAL DENTAL ARCH DATABASE
PROCÉDÉ DE FABRICATION D'UNE PROTHÈSE À L'AIDE D'UNE BASE DE DONNÉES NUMERIQUE DE RANGÉES DE DENTS, ET UTILISATION D'UNE TELLE BASE DE DONNÉES NUMERIQUE DE RANGÉES DE DENTS

(30) Priorität: 29.01.2019 DE 102019201115
(43) Veröffentlichungstag der Anmeldung: 08.12.2021
(73) Patentinhaber: Merz Dental GmbH, 24321 Lütjenburg (DE)
(72) Erfinder: KLINGENBURG, Friedhelm, 24113 Molfsee (DE); KLEWER, Olaf, 52064 Aachen (DE); POERSCHKE, Frank, 56132 Becheln (DE)
(74) Vertreter: Fish & Richardson P.C.
(86) Internationale Anmeldenummer: PCT/EP2020/052172
(87) Internationale Veröffentlichungsnummer: WO 2020/157136

(56) Entgegenhaltungen:
- US-A1- 2011 276 159
- US-A1- 2012 040 311
- US-A1- 2016 193 019
- US-A1- 2018 098 829

## Beschreibung

Die vorliegende Erfindung betrifft ein Verfahren zur Herstellung eines Zahnersatzes anhand einer digitalen Zahnreihendatenbank sowie deren Verwendung.

Mittlerweile wird mehrheitlich ein Zahnersatz mit Hilfe computergestützter Technologien hergestellt. Beispielsweise mit einem Computer-Aided Design (CAD)/ Computer Aided Manufacturing (CAM) Verfahren. Zunächst wird die Mundsituation mit einem Intraloralscanner oder einer Intraoralkamera gescannt und erfasst, wodurch die konventionelle Abdrucknahme entfällt. Die erfassten Daten werden an die CAD-Software transferiert und gespeichert. Aufgrund der nun vorliegenden Daten der Mundsituation des Patienten wird in der CAD-Software der Zahnersatz konstruiert und durch ein CAM Verfahren hergestellt. Für die Konstruktion des Zahnersatzes sind üblicherweise virtuelle Zähne in verschiedenen Größen und Farben in der CAD-Software abgelegt. So dass aufgrund der ermittelten Daten der Mundsituation die passende Form und Farbe für den Zahnersatz ausgewählt werden kann. Es können sowohl einzelne Zähne als auch Zahnblöcke, beispielsweise ein Block für die Seitenzähne, der aus mehreren Zähnen besteht, ausgewählt werden. Dieses Verfahren kann sowohl für Einzelrestaurationen als auch für Total-oder Teilprothesen verwendet werden.

US2011276159 offenbart ein Verfahren und ein System zur Herstellung einer Zahnprothese.

Alternativ kann eine konventionelle Abformung und Bissnahme durch eine Anfertigung von Gipsmodellen erfolgen, welche dann digitalisiert und computergestützt konstruiert und hergestellt werden.

Der Nachteil bei den herkömmlichen Verfahren ist jedoch, dass nach der Herstellung des Zahnersatzes eine Anpassung und Positionierung der Okklusion mittels eines Artikulators (Kau-Simulator) erforderlich ist. Beim Artikulator handelt es sich um ein Gerät, in dem die zuvor gefertigten Gipsmodelle der beiden Kiefer in Okklusion, das heißt im Zusammenbiss, einmontiert werden. Auf diese Weise wird die Situation des natürlichen Kiefers auf ein externes Modell verlagert, wodurch es ermöglicht wird, die Bewegungen der Kiefer im Verhältnis zueinander außerhalb des Mundes des Patienten zu simulieren. Neben den herkömmlichen Artikulatoren gibt es auch "virtuelle Artikulatoren". Dabei werden die digital erstellten Modelle in den virtuellen Artikulator eingesetzt. Die Simulation der Kaubewegung mittels eines Artikulators ist ein zusätzlicher Schritt, der auch mit mehreren Sitzungen für die Anpassung des Zahnersatzes zusammenhängt, der vor allem sowohl für die Fachkräfte als auch für die Patienten zeitaufwändig ist.

Somit ist es Aufgabe der vorliegenden Erfindung ein Verfahren zur Herstellung eines Zahnersatzes bereitzustellen, welche die Nachteile des Standes der Technik vermeidet. Ferner ist es Aufgabe der vorliegenden Erfindung, die Arbeitsschritte und Sitzungen verzur individuellen Anpassung des Zahnersatzes an den Patienten zu verringern und die Annehmlichkeiten des Patienten zu verbessern.

Die Erfindung ist in den Ansprüchen definiert.

Erfindungsgemäß wird zur Lösung der Aufgabe vorgeschlagen, dass ein Verfahren zur Herstellung eines Zahnersatzes bereitgestellt wird, bei dem bereits eine vordefinierte digitale Zahnreihendatenbank bereitgestellt ist, wobei die Zahnreihendatenbank bereits in Okklusion stehende Oberkiefer- und Unterkiefer-Zahnreihendaten aufweist. Beispielsweise könnte auch ein zu fräsendes Werkstück anhand der digitalen Daten mit in Okklusion stehenden Zahnreihendaten gefräst werden.

Somit wird der Zahnersatz auf Basis der in Okklusion stehenden digitalen Oberkiefer- und Unterkiefer- Zahnreihendaten generiert.

Mit dieser anmeldungsgemäßen Maßnahme wird erreicht, dass mittels eines vollständig digitalen Workflows die Patientenversorgung auf eine minimale Anzahl an Sitzungen reduziert wird. Wodurch der Ablauf der Arbeitsschritte in seiner Komplexität auf ein Minimum komprimiert wird und der Kommunikationsaustausch zwischen dem Zahnarzt und dem Zahntechniker auf das Wesentliche reduziert wird. Dadurch wird die Annehmlichkeit des Patienten ebenfalls verbessert. Somit entfällt der Einsatz konventioneller Methoden wie Abformung mittels Silikonmatetrial, Herstellung von manuellen provisorischen Kronen- und Brückenversorgungen, und mehrmalige Anpassungen an den Patienten. Wodurch auch die Annehmlichkeit des Patienten deutlich verbessert werden.

Die Konstruktion sowie Herstellung des Zahnersatzes kann sowohl vollständig digital, als auch in einer Kombination von digital und analog erfolgen. Durch File-Splitting der digitalen Zahnreihendatensätze kann jederzeit und je nach Bedarf und Wunsch die Restauration zwischen digital und digital unterstützt erstellt werden. Über File-Splitting kann ein virtueller Datensatz beispielsweise in zwei unterschiedliche Teile, Gerüst und Verblendung, geteilt werden.

Weitere vorteilhafte Ausgestaltungen der vorliegenden Erfindung sind Gegenstand der Unteransprüche.

Die in Okklusion stehenden Ober-und Unterkiefer-Zahnreihendaten sind in einer lagebezüglichen Position aufgestellt. Die lagebezügliche Position ist vordefiniert. Die vordefinierte lagebezügliche Position wird durch die vordefinierten in Okklusion stehenden Oberkiefer- und Unterkiefer-Zahnreihendaten zur Verfügung gestellt. Eine digitale Konstruktion und einer Fertigung mittels subtraktiver und/oder additiver Herstellverfahren einer Restauration erfolgt durch die vordefinierte lagebezügliche Position.

Durch die vordefinierte digitale okklusale Aufstellung der Zahnreihendaten des Ober- und Unterkiefers wird es dem Anwender ermöglicht, ohne zusätzliche Funktionshilfen wie Artikulatoren eine entsprechende Restauration digital zunächst zu konstruieren und später dann entsprechend mittels subtraktiver oder additiver Herstellverfahren zu fertigen. Zu den subtraktiven Fertigungsverfahren zählen Schleifen, Fräsen und Drehen. Damit können durch fortlaufende Perfektionierung hochpräzise Restaurationen aus unterschiedlichsten Werkstoffen gefertigt werden. Mit den additiven Fertigungsverfahren werden Restaurationen Schicht für Schicht aufgebaut. Dadurch kann das Design passgenau und porenfrei realisiert werden und aufwändige Nachbearbeitungen entfallen.

Aufgrund der vorgeschlagenen Aufstellung und der bestehenden Lagebezüglichkeit bietet das System auch die Möglichkeit, ohne Verlust der Lagebezüglichkeit und der definierten Okklusionsstellung auch Einzelzähne aus der Zahnreihendatenbank individuell anzupassen.

Anhand von den vordefinierten in Okklusion stehenden Oberkiefer- und Unterkiefer-Zahnreihendaten können auch digital ein oder mehrere Implantatverbindungselemente im Ober-und/oder - Unterkiefer positioniert und konstruiert werden.

Die Positionierung und die Auswahl der Implantatverbindungselemente erfolgt in der CAD-Software. Der Zahnersatz wird daraufhin mit Ausnehmungen für die Implantatverbindungselemente hergestellt.

Die Zahnform und/oder Zahngröße und/oder Zahnfarbe und/oder Zahnbogenweite der vordefinierten digitalen in Okklusion stehenden Ober- und Unterkiefer-Zahnreihendaten können an gescannte Daten einer Mundsituation eines Patienten angepasst werden. Die Anpassung erfolgt in der CAD-Software.

Durch die oben beschriebenen Verfahren können eine Vielzahl von standardisierten und/oder auch individualisierten Konstruktionen für Trays/Abformlöffel und/oder Prothesen und/oder Immidiatprothesen und/oder Interimsprothesen und/oder Teil-, Total- und Hybridprothesen mit jeder Form der Sekundär und Tertiärkonstruktionen, und/oder Bohrschablonen mit und ohne vorgegebenen Zahnreihen, und/oder Kieferorthopädische Konstruktionen wie z.B. Klammern sowie Ästhetische Anwendungen präzise und effizient in additiven und / oder auch subtraktiven Herstellverfahren generiert werden.

Unter Verwendung von entsprechenden Abformprozessen beispielsweise eine Abformung durch den Baltic Denture System^{®}, wobei die Abformung, Bissnahme und Übertragung beispielsweise in einer Zahnarztpraxis effizient gestaltet wird und die Informationen an das Labor übertragen werden. Aber auch unter Verwendung von anderen bekannten und bestehenden Verfahren kann aufgrund der vorgegebenen Positionierung und der Lagebezüglichkeit des Oberkiefers zum Unterkiefer, wobei die Kiefer auch aus Restbezahnungen und zu erhaltenden Zahnsituationen bestehen können, jede Art von Zahnersatz effizient und präzise erstellt werden. Unabhängig von der Art der Aufbauten - ob Implantate (Einzel- oder steggestützte Implantate), Geschiebe, Hybridkonstruktion und weitere bekannte Aufbauten.

Das Verfahren ist systemunabhängig, das heißt unabhängig von der Restauration und von den eingesetzten Materialien anwendbar.

Somit stellen die digitalisierten in Okklusion stehenden Zahnreihendaten die Grundlage für eine digitale Konstruktion und materialunabhängige Weiterverarbeitung zu einem Zahnersatz dar.

Die in Okklusion stehenden Zahnreihendaten werden als digitale Zahnreihendatenbank in einer entsprechenden Software zur Verfügung gestellt.

Das Werkstück/der Fräsrohling ist letztlich ein Ergebnis der digitalen Zahnreihendatenbank mit einer unmittelbar verbundenen Prothesenbasis.

Durch die in Okklusion stehenden Zahnreihendatenbank ist durch das Backward-Planning/ Engineering oder auch Reverse Planning/Engineering eine größtmögliche Fertigungsvielfalt gegeben.

Backward-Planning ist eine optimale Implantat-Prothetik, wobei vom idealen Implantat-Zahnersatz aus, rückwärts zur Implantatversorgung geplant wird. Das heißt, dass beim Backward-Planning der Zahnersatz die Position der Zahnimplantate bestimmt. Anhand von Modellen der Zähne von Ober- und Unterkiefer werden Informationen über Beschaffenheit von Zähnen, Knochen und Weichgewebe gewonnen. Mittels einer computergestützten 3D-Implantatplanung kann der Zahnarzt die geeignete Implantatanzahl, die idealen Implantatpositionen, ihre Länge, Ausrichtung und Bohrtiefe sowie Maßnahmen zum Aufbau von Weich- oder Knochengewebe planen. Der Zahntechniker plant die ideale funktionelle Zahnaufstellung und Zahnästhetik. Somit wird der ursprünglich gesunde Zustand von Zähnen und Zahnfleisch in Ober- und Unterkiefer wiederhergestellt, ausgehend von der momentanen, pathologischen Ist-Situation. Backward-Planning erlaubt somit eine passgenaue endgültige Versorgung mit Zahnersatz aus hochwertigen Materialien.

Der gesamte Workflow ausgehend von den in Okklusion stehenden Zahnreihendaten des Ober-und Unterkiefers in einer Zahnreihendatenbank führt als digitales Abbild der Fräsrohlinge mit den Zahnreihen, über ein Matching der digital erfassten Abformung der Patientensituation mit Hilfe einer möglichst in Okklusion stehenden Oberkiefer/Unterkiefer-Relation durch beispielsweise dem BD-KEY, Altprothese oder konventionelle Abformung, über vorhandene CAD/CAM Verfahren zur Herstellung von beispielsweise Teil- bzw. Totalprothesen.

Matching ist der digitale Weg indem die virtuellen Modelle direkt mit den ebenfalls eingescannten Oberflächen der Kieferregistrierung virtuell eingegipst werden.

Mittels einer digitalen Zahnreihendatenbank mit in Okklusion befindenden Zahnaufstellungen, welche aufgrund der Individualisierung der in Okklusion befindenden Zahnaufstellung wird eine für fast jeden Patienten individuelle Versorgung mittels digitalen Workflows sichergestellt.

Vorzugsweise erfolgt das Verfahren anhand einer digitalen Abformung mittels eines Intraoral-Scanners beispielsweise durch Anwendung des Baltic Denture System^{®}, welches aus einem BD-KEY Set besteht. Das BD-KEY Set besteht beispielsweise aus einem Bissnahmewerkzeug für den Unterkiefer und einem Bissnahmewerkzeug für den Oberkiefer, wobei das Bissnahmewerkzeug für den Ober- und Unterkiefer bereits in Okklusion stehende Zähne aufweist. Dieser wird in den Mund des Patienten eingesetzt. Das Bissnahmewerkzeug für den Oberkiefer kann über ein Verschlüsselungselement mit dem Bissnahmewerkzeug für den Unterkiefer fest verbunden werden. Die Daten werden daraufhin durch einen Intraoral-Scanner gescannt und in eine dafür vorgesehene Software beispielsweise eine CAD-Software zur Konstruktion übertragen. Die in Okklusion stehenden Zahnreihendaten werden somit digitalisiert und in einer Zahnreihendatenbank abgelegt und gespeichert. Dadurch können individualisierte Abformlöffel, auch als individuelle Abformlöffel geeignet und/oder individualisierte Zahnrestaurationen durch die Überführung der Daten durch ein CAM-Verfahren beispielsweise subtraktiv oder additiv hergestellt werden.

Der Vorteil ist, dass in nur einer Sitzung die gesamte Abformung und Digitalisierung der Daten erfolgen kann. Woraufhin die Daten direkt an ein Zahntechniklabor übertragen werden und dort in einer weiteren Sitzung die fertige Konstruktion digital erfolgen kann. Durch die digitale Aufstellung der Zahnreihen in Okklusion entfällt jegliche nachträgliche Anpassung und Zuordnung der Kiefer in Relation zueinander.

Anhand der nachfolgenden Zeichnung ist die vorteilhafte Ausgestaltung der vorliegenden Erfindung wiedergegeben.

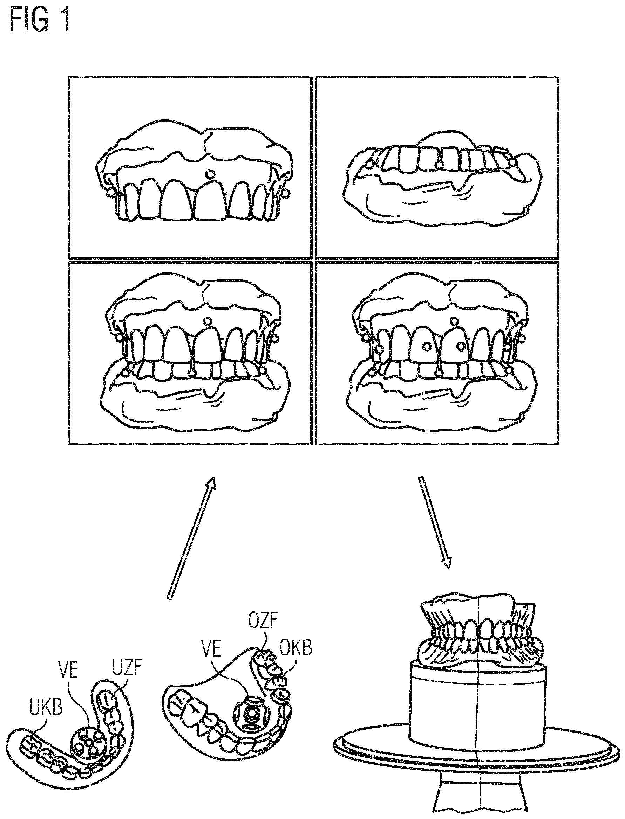

**Fig.** 1 zeigt ein Bissnahmewerkzeug für den Ober- und Unterkiefer, die Zahnreihendatenbank und eine fertig gestellte Totalprothese.

**Fig.** 1 zeigt in Okklusion aufgestellte Zahnreihendaten 1, 2 in einer CAD-Software, die in einer Zahnreihendatenbank 10 bereitgestellt sind. Die Zahnreihendaten 1, 2 sind anhand eines gescannten Datensatzes der Mundsituation des Patienten vordefiniert. Die in Okklusion stehenden Ober-und Unterkiefer-Zahnreihendaten sind in einer vordefinierten lagebezüglichen Position aufgestellt. Die Mundsituation des Patienten bzw. die Kieferrelation des Patienten wird mittels des Bissnahmewerkzeuges für den Ober- und Unterkiefer bestimmt, wobei das Bissnahmewerkzeug bereits in Okklusion aufgestellte Zahnreihen aufweist. Das Bissnahmewerkzeug des Oberkiefers kann über ein Verschlüsselungselement mit dem Bissnahmewerkzeug des Unterkiefers fest verbunden werden. Das Bissnahmewerkzeug des Ober- und Unterkiefers kann auch mittels eines Verbindungselementes in den Mund des Patienten eingesetzt werden. Auf Basis der digitalen vordefinierten Zahnreihendaten des Ober- und Unterkiefers, die bereits in Okklusion aufgestellt sind, wird beispielsweise eine Totalprothese, wie sie in **Fig.** 1 gezeigt ist, hergestellt. Auf **Fig.** 1 ist deutlich erkennbar, dass die künstlichen Zähne der Prothese des Ober- und Unterkiefers in exakter Relation zueinanderstehen, so dass die Prothese nicht mehr nachbearbeitet werden muss bzw. die Positionierung der Okklusion nicht mehr mittels eines Hilfsmittels z.B. eines Artikulators erforderlich ist. Dies spart Arbeitsaufwand seitens des Zahntechnikers und des Zahnarztes und spart dem Patienten eventuell weitere Sitzungen.

Es hat sich als vorteilhaft herausgestellt, wenn die in Okklusion aufgestellten digitalen Zahnreihendaten durch das Verfahren zur Bissregistrierung und die Benutzung eines Bissnahmewerkzeuges, wie es in der deutschen Patentanmeldung DE 10 2014 117 252 beschrieben ist, deren Offenbarungsgehalt vollinhaltlich, in den vorliegenden Offenbarungsgehalt aufgenommen wird, entspricht. Sowie wenn das Werkstück zur Herstellung eines Zahnersatzes, durch in Okklusion stehende Ober- und Unterkiefer-Zahnreihendaten, zumindest teilweise den ebenfalls in Okklusionsstellung aufgereihten Zahnformen einen Fräsblocks, vorzugsweise Dentalfräsblock, entsprechen, wie es in der deutschen Patentanmeldung DE 10 2011 118 320 beschrieben ist, deren Offenbarungsgehalt vollinhaltlich, vorzugsweise mit Blick auf den Fräsblock, das Fräsblocksystem und entsprechenden Herstellungsverfahren, in den vorliegenden Offenbarungsgehalt aufgenommen wird.

## Patentansprüche

1. Verfahren zur Herstellung eines Zahnersatzes, **gekennzeichnet durch**
a) Bereitstellen einer vordefinierten digitalen Zahnreihendatenbank, wobei die Zahnreihendatenbank in Okklusion stehende Oberkiefer- und Unterkiefer-Zahnreihendaten aufweist;
b) Generieren des Zahnersatzes auf Basis der in Okklusion stehenden Oberkiefer- und Unterkiefer- Zahnreihendaten,
c) wobei die in Okklusion stehenden Ober-und Unterkiefer-Zahnreihendaten in einer lagebezüglichen Position aufgestellt sind, wobei die lagebezügliche Position vordefiniert ist.

2. Verfahren nach Anspruch 1, **dadurch gekennzeichnet, dass** die vordefinierte lagebezügliche Position durch die vordefinierten in Okklusion stehenden Oberkiefer- und Unterkiefer-Zahnreihendaten zur Verfügung gestellt wird.

3. Verfahren nach einem der Ansprüche 1 bis 2, **dadurch gekennzeichnet, dass** eine Anpassung von Einzelzähnen aus der Zahnreihendatenbank individuell erfolgen kann.

4. Verfahren nach einem der Ansprüche 1 bis 3, **dadurch gekennzeichnet, dass** eine digitale Konstruktion und eine Fertigung mittels subtraktiver und/oder additiver Herstellverfahren einer Restauration durch die vordefinierte lagebezügliche Position erfolgt.

5. Verfahren nach einem der Ansprüche 1 bis 4, **dadurch gekennzeichnet, dass** anhand von den vordefinierten in Okklusion stehenden Oberkiefer- und Unterkiefer-Zahnreihendaten digital ein oder mehrere Implantatverbindungselemente im Ober-und/oder - Unterkiefer positioniert und konstruiert werden.

6. Verfahren nach einem der vorhergehenden Ansprüche, **dadurch gekennzeichnet, dass** die Zahnform und/oder Zahngröße und/oder Zahnfarbe und/oder Zahnbogenweite der vordefinierten digitalen in Okklusion stehenden Ober- und Unterkiefer-Zahnreihendaten an gescannte Daten einer Mundsituation eines Patienten angepasst werden können.

7. Verwendung einer digitalen Zahnreihendatenbank mit in Okklusion stehenden Ober- und Unterkiefer-Zahnreihendaten in einem Verfahren nach einem der Ansprüche 1 bis 6 zur Herstellung einer Teil- oder Totalprothese.

8. Verwendung einer digitalen Zahnreihendatenbank mit in Okklusion stehenden Ober- und Unterkiefer-Zahnreihendaten in einem Verfahren nach einem der Ansprüche 1 bis 6 zur Herstellung eines Bissnahmewerkzeuges.

## Claims

1. Method for producing a denture, **characterized by**
a) providing a predefined digital dental arch database, wherein the dental arch database has data of maxilla and mandible dental arches in occlusion;
b) generating the denture on the basis of the data of maxilla and mandible dental arches in occlusion,
c) wherein the data of maxilla and mandible dental arches in occlusion are positioned in a situation-related position, wherein the situation-related position is predefined.

2. Method according to Claim 1, **characterized in that** the predefined situation-related position is provided by the predefined data of maxilla and mandible dental arches in occlusion.

3. Method according to either of Claims 1 and 2, **characterized in that** an adaptation of individual teeth from the dental arch database can take place individually.

4. Method according to any of Claims 1 to 3, **characterized in that** a digital design and a manufacture of a restoration by means of subtractive and/or additive production methods are carried out by the predefined situation-related position.

5. Method according to any of Claims 1 to 4, **characterized in that** one or more implant connecting elements are digitally positioned and designed in the maxilla and/or mandible on the basis of the predefined data of maxilla and mandible dental arches in occlusion.

6. Method according to any of the preceding claims, **characterized in that** the tooth shape and/or tooth size and/or tooth colour and/or tooth arch width of the predefined digital data of maxilla and mandible dental arches in occlusion can be adapted to scanned data of a mouth situation of a patient.

7. Use of a digital dental arch database having data of maxilla and mandible dental arches in occlusion in a method according to any of Claims 1 to 6 for producing a partial or total prosthesis.

8. Use of a digital dental arch database having data of maxilla and mandible dental arches in occlusion in a method according to any of Claims 1 to 6 for producing an occlusal registration tool.

## Revendications

1. Procédé de production d'une prothèse dentaire, **caractérisé par**
a) fourniture d'une base de données numérique prédéfinie de rangées de dents, la base de données de rangées de dents possédant des données de rangées de dents de mâchoire supérieure et de mâchoire inférieure qui se trouvent en occlusion ;
b) génération de la prothèse dentaire sur la base des données de rangées de dents de mâchoire supérieure et de mâchoire inférieure qui se trouvent en occlusion ;
c) les données de rangées de dents de mâchoire supérieure et inférieure qui se trouvent en occlusion étant placées dans une position relative à la situation, la position relative à la situation étant prédéfinie.

2. Procédé selon la revendication 1, **caractérisé en ce que** la position relative à la situation prédéfinie est mise à disposition par les données de rangées de dents de mâchoire supérieure et de mâchoire inférieure qui se trouvent en occlusion prédéfinies.

3. Procédé selon l'une des revendications 1 à 2, **caractérisé en ce qu'**une adaptation de dents individuelles issues de la base de données de rangées de dents peut être effectuée individuellement.

4. Procédé selon l'une des revendications 1 à 3, **caractérisé en ce qu'**une construction numérique et une fabrication au moyen d'un procédé de production soustractive et/ou additive d'une restauration sont effectuées par la position relative à la situation prédéfinie.

5. Procédé selon l'une des revendications 1 à 4, **caractérisé en ce qu'**un ou plusieurs éléments de connexion d'implant sont positionnés et construits numériquement dans la mâchoire supérieure et/ou inférieure à l'aide des données prédéfinies de rangées de dents de mâchoire supérieure et de mâchoire inférieure qui se trouvent en occlusion.

6. Procédé selon l'une des revendications précédentes, **caractérisé en ce que** la forme de dent et/ou la taille de dent et/ou la couleur de dent et/ou la largeur de l'arc dentaire des données prédéfinies de rangées de dents de mâchoire supérieure et inférieure qui se trouvent en occlusion peuvent être adaptées à des données acquises par balayage d'une situation buccale d'un patient.

7. Utilisation d'une base de données numérique de rangées de dents comprenant des données de rangées de dents de mâchoire supérieure et inférieure qui se trouvent en occlusion dans un procédé selon l'une des revendications 1 à 6 pour la production d'une prothèse partielle ou totale.

8. Utilisation d'une base de données numérique de rangées de dents comprenant des données de rangées de dents de mâchoire supérieure et inférieure qui se trouvent en occlusion dans un procédé selon l'une des revendications 1 à 6 pour la production d'un outil d'enregistrement occlusal.
